# EUROPEAN PATENT SPECIFICATION

(11) **EP 0 876 873 B1**
(45) Date of publication and mention of the grant of the patent: **22.11.2000**
(21) Application number: 97830206.5
(22) Date of filing: 30.04.1997
(51) Int. Cl.: B23Q 11/04

(54) **Machine tool for making holes in elements intended for fibreglass extrusion**
Werkzeugmaschine zum Herstellen von Löchern in Teilen, die für das Glasfaserstrangpressen vorgesehen sind
Machine-outil pour fabriquer des trous dans des éléments prévus pour l'extrusion des fibres en verre

(43) Date of publication of application: 11.11.1998
(73) Proprietor: TECHINT COMPAGNIA TECNICA INTERNAZIONALE S.p.A., 20121 Milano (IT)
(72) Inventor: Montani, Luigi, 26019 Vailate, (Cremona) (IT)
(74) Representative: Sutto, Luca, Ing.

(56) References cited:
- EP-A- 0 755 750
- WO-A-91/03349
- CH-A- 523 116
- DE-A- 4 000 948
- FR-A- 2 702 976
- US-A- 3 765 790
- US-A- 5 242 360
- PATENT ABSTRACTS OF JAPAN vol. 011, no. 210 (M-604), 8 July 1987 & JP 62 028104 A (MITSUBISHI ELECTRIC CORP), 6 February 1987,
- PATENT ABSTRACTS OF JAPAN vol. 011, no. 393 (M-654), 23 December 1987 & JP 62 162405 A (HITACHI LTD), 18 July 1987,

## Description

The present invention relates to a machine tool for making holes in elements intended for fibreglass extrusion.

It is known that for manufacturing glass fibres or filaments or other similar materials, appropriate centrifugal extruders or rotors are used that consist of bodies having a substantially toroidal shape peripherally provided with a very high number of radial through holes, twenty/twenty-five thousand holes for example, of a very small diameter, generally in the order of 0.6:1.2 mm. The raw material in a melted state intended to form the glass fibre is supplied to these extruders that are driven in rotation so as to eject, by centrifugation, the melted glass contained therein through the radial holes, in order to form thread-like elements that are further stretched and made thin by vertical jets of hot gases before they are laid on the underlying conveyor belts.

Some known techniques for executing the above mentioned radial holes in centrifugal extruders avoid using drilling tools and replace them with laser beams or EDM (electron discharge machining) methods.

These techniques however have a drawback, in that holes are not made so perfectly cylindrical as they actually should be for enabling an optimal extrusion condition and, in addition, use of a laser beam in particular may give rise to work hardened areas in the steel material of which the extruder is made. The extruder structure therefore appears to be weaker and the extruder duration of live may become greatly reduced.

Another more traditional known technique is based on the use of machine tools provided with points each of which is engaged in a tool-holding head coupled to a spindle.

Appropriate drive means makes the spindle perform a rotary work motion and other actuating means move the spindle with a translatory advance movement.

This known technique however, while enabling holes of perfectly cylindrical shape to be obtained by drilling of the mechanical type and avoiding work hardening in the material, has a serious drawback in that it is subjected to frequent interruptions in working because the material of the extruder to be drilled, generally high-carbon chrome-nickel steel, may sometimes have some lack of homogeneity in terms of hardness, which causes tool breakages at the areas of greater resistance to tool penetration.

Practically, since, as already pointed out, a very great number of holes are to be made, taking into account the fact that point tools are to be often replaced, the production rates are very reduced and, as a result, the overall working costs of the elements intended for extrusion of glass fibres increase.

It is also known from document DE 4000948 a machine tool presenting a spindle equipped with a tool holding head supporting a point tool. Actuating means makes the spindle perform a translatory advanced motion, while a control unit allows stopping of the translatoy motion of the spindle in case of predetermined axial resisting forces acting on the tool.

Document CH 523116 discloses a machine-tool drive in which an engine provokes simultaneously a rotation and a descent of the tool and a rise of a net screw coaxial and engaged to the tool shaft.

During the rise, the net screw load a spring increasing tool pressure against the piece to be worked. The spring can be also pre-loaded by means of a control screw so as to increase or decrease the maximum axial forces of the tool.

Under this situation, the technical task underlying the present invention is to provide a machine tool, as defined in claim 1, for making holes capable of substantially obviating the above mentioned drawbacks.

Within the scope of this technical task, it is an important aim of the invention to provide a machine tool for making holes capable of substantially eliminating the possibility of breaking the point tools even when workings are carried out on materials having confined areas which in an unforeseeable manner are of higher hardness than all the other areas having the expected hardness and which therefore cannot be penetrated by tools provided for normal drilling.

The technical task mentioned and the aim specified are substantially achieved by a machine tool for making holes as described in the appended claims.

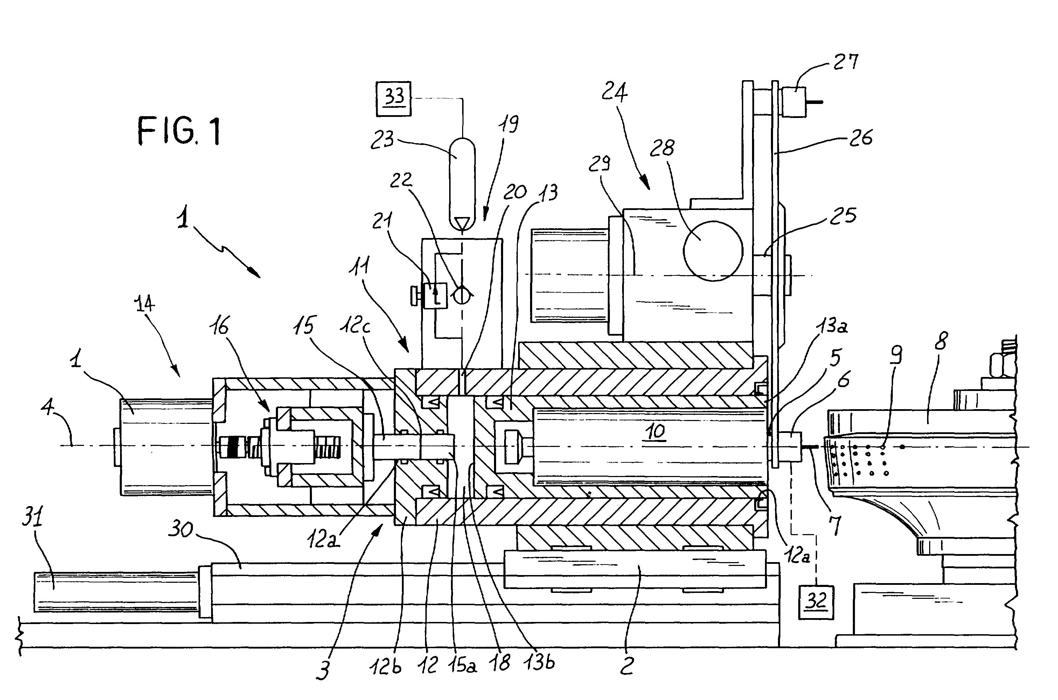

Description of a preferred but non-exclusive embodiment of a machine tool for making holes in accordance with the invention is now given hereinafter, by way of non-limiting example, with reference to the accompanying drawing in which the only figure is a longitudinal sectional view of the machine close to an extruder element to be submitted to drilling operations.

With reference to the drawing, the machine tool for making holes in accordance with the invention is generally identified by reference numeral 1. It comprises a base 2 with which actuating means 3 is integral, said means being adapted to carry out the translatory advance movement along a horizontal axial direction 4 of a spindle 5 provided with a first tool-holding head 6 to be coupled thereto by fitting along the same axial direction 4. A point tool 7 can be fixed to the tool-holding head 6, said tool 7 being capable of radially drilling an extruder element 8 so as to form radial holes 9 therein which are intended for extruding glass fibres.

The rotary work motion of the spindle is performed by drive means 10 of a type known per se.

In an original manner, the actuating means 3 comprises a control unit 11 for the translatory advance movement of spindle 5 adapted to enable the spindle to stop in the axial direction 4 in the presence of resisting axial forces exceeding a predetermined value and acting on the tool 7.

More particularly, actuating means 3 comprises a support body 12 integral with the base 2 and defined by a hollow cylinder having a front opening 12a and a head 12b disposed at the back.

Slidably coupled within the hollow cylinder 12 is a piston element 13 defining a slide adapted to house the spindle 5 and related drive means 10 for governing the work movement. Practically, the piston element 13 has a length slightly lower than that of the inner cavity of cylinder 12 and during its translatory movement it can emerge by one end 13a thereof turned towards the tool-holding head 6 from the front opening 12a of cylinder 12.

In addition, the actuating means 3 comprises a power unit 14 having a movable drive member 15 defined by a cylindrical rod adapted to carry out said translatory advance movement having strokes of predetermined length, upon interposition of a kinematic mechanism 16 converting the rotary motion of an electric motor 17 into a rectilinear motion.

The control unit 11 is operatively interposed between the drive member 15 and the piston element 13 and is comprised of a chamber 18 defined between the head 12b and the second end 13b or back face of the piston element 13. Chamber 18 is filled with a predetermined amount of oil and therefore takes the volume of said oil. The cylindrical rod 15 is slidably engaged in a through hole 12c of head 12b and has an end portion 15a fitted in chamber 18.

Also provided is fluid-operated means 19 communicating with chamber 18 through a small channel 20, formed in the side wall of cylinder 12 close to head 12b and adapted to discharge oil from said chamber upon overcoming of a calibration pressure corresponding to the presence of said axial resisting forces on the tool higher than said predetermined value and to admit the discharged oil again into chamber 18 in case of pressures lower than said calibration pressure.

The fluid-operated means 19 consists of a fluid-operated circuit comprising a pressure relief valve 21 regulated on said calibration pressure, a one-way valve 22 disposed in parallel with valve 21 and a hydraulic accumulator 23 in communication with both said valves.

Also provided to advantage is a tool-changing unit 24 integral with the cylinder 12 and adapted to pick up a tool to be replaced due to wear or breakage, from spindle 5 and to fit a new tool on the end of the spindle itself.

The tool-changing unit 24 comprises a revolving turret 25 provided with a symmetric arm 26 adapted to support at least two tool-holding heads at its ends, i.e. the first tool-holding head 6 and a second tool-holding head 27. Obviously, by means of appropriate modifications, tool-changing units having three or more tool-holding heads could be provided.

In addition, the tool-changing unit 24 comprises drive means 28 both for the translatory motion of turret 25 in the direction of said advance motion, that is along an oscillation axis 29 parallel to the axial direction 4, and for the rotary motion of said turret about the oscillation axis 29.

Since in its operating position tool 7 is close to the extruder element 8 surface, in order to enable displacement of turret 25 so that the tool-holding head 26 or tool-holding head 27 may be removed from or fitted on the spindle, base 2 is movable on slide guides 30 by displacement means 31 consisting for example of a hydraulic actuator, operatively coordinated with the drive means 28 so as to move the cylinder 12 close to or away from the extruder element submitted to working.

For a complete operating automation of the tool-changing unit 24, a sensor 32 detecting tool breakage may be provided to which the drive means 28 can be interlocked.

Finally and advantageously, the control unit 11 may comprise a counter 33, connected to the hydraulic accumulator 23 and adapted to signal the number of oil discharges carried out by means 19 so as to identify the corresponding number of interruptions in the translatory motion of the spindle, that is the number of unexecuted through holes 9.

Operation of a machine tool for making holes described above mainly as regards structure, is as follows.

The translatory advance motion of spindle 5 and consequently of point tool 7 is carried out by penetration of the end portion 15a of the drive member 15 into chamber 18. This penetration causes a displacement of the piston element 13 corresponding to maintenance of a constant volume in the oil amount present therein, being oil incompressible.

If the advance motion of point tool 7 into the extruder element 8 is counteracted by anomalous axial forces due to the presence of particularly hard areas in the material to be drilled, the oil pressure in chamber 18 increases and, upon reaching the calibration pressure of the pressure relief valve 21, causes discharge of part of the oil into the accumulator 23. In this way, while the drive member 15 is completing its intended advance stroke, the piston element 13 instantaneously stops and the point tool 7 is not submitted to dangerous stresses that could cause breaking of same.

During the backward stroke of the drive member 15, since a lower pressure is restored in chamber 18, the oil contained in accumulator 23 is admitted again to the chamber itself that, as a result, will house the same oil amount as at the beginning.

If replacement of the point tool 7 is required, due to wear or because it is broken, although the last-mentioned occurrence is practically possible substantially only due to periodic wear, the tool-changing unit 24 carries out removal of spindle 5 of the first tool-holding head 6 and fitting of the second head 27 thereon with the related point tool. For this operation, the displacement means 31 operates backward movement of base 1 relative to the extruder element 8 so as to create an appropriate room to enable a translatory motion of turret 25 sufficient for disengagement of the first tool-holding head 6 from the spindle. After carrying out rotation of the symmetric arm 26 and a new backward translatory motion of turret 25 for fitting the second tool-holding head 27 on the spindle, base 2 is brought back to the extruder element 8 at the intended operating distance.

The invention achieves important advantages.

Actually, since the point tools are practically never submitted to too many stresses, they have a greatly increased duration of life and therefore replacement of them has a much more reduced frequency.

It is to point out that, above all in case of execution of a very high number of holes, as it is necessary for making extruder elements designed to form glass fibres, the production rates undergo almost inexistent interruptions and the production costs of these elements are greatly reduced.

## Claims

1. A machine tool for making holes in elements intended for fibreglass extrusion, comprising:
- at least one point tool (7);
- at least one spindle (5) equipped with a tool-holding head (6);
- drive means (10) for carrying out the rotary work motion of the spindle (5); and
- actuating means (3), adapted to make the spindle (5) perform a translatory advance motion, comprising:
a support body (12);
a slide (13) slidably coupled to said support body (12) and adapted to house said spindle (5); a power unit (14) integral with said support body (12) and having a movable drive member (15) adapted to carry out said translatory motion with strokes of predetermined length,
a control unit (11), operatively interposed between said drive member (15) and slide (13), for said translatory advance motion adapted to enable stopping of the translatory motion of said spindle (5) in the presence of axial resisting forces acting on the tool (7) that are higher than a predetermined value;
characterized in that said support body (12) is hollow and said slide (13) is slidable within said hollow support body and has one end (13a) turned towards said tool-holding head (6), in that said control unit (11) comprises a chamber (18) filled with a predetermined amount of oil and confined between one head (12b) of said hollow support body and a second end (13b) of said slide, and fluid-operated means (19) in communication with said chamber (18) and adapted to discharge oil from the chamber itself upon overcoming of a calibration pressure corresponding to the presence of said axial resisting forces higher than said predetermined value and to admit the discharged oil again into said chamber in case of pressures lower than said calibration pressure, and in that said drive member (15) is slidably engaged in a through hole (12c) of said support body head (12b) and has an end portion (15a) fitted in said chamber.

2. A machine as claimed in claim 1, characterized in that said support body (12) is defined by a hollow cylinder and said slide (13) is defined by a piston element slidable within said hollow cylinder, and in that said drive member (15) is defined by a cylindrical rod slidably engaged in a through hole (12c) of said cylinder head (12b) and having an end portion (15a) fitted in said chamber.

3. A machine as claimed in claim 1, characterized in that said fluid-operated means (19) comprises:
- a pressure relief valve (21);
- a one-way valve (22) disposed in parallel with said pressure relief valve (21); and
- a hydraulic accumulator (23) in communication with said valves (21, 22).

4. A machine as claimed in claim 1, characterized in that it comprises a tool-changing unit (24) integral with said support body (12) and adapted to pick up a tool to be replaced from said spindle (5) and fit a new tool onto the spindle itself.

5. A machine as claimed in claim 4, characterized in that said tool-changing unit (24) comprises:
- a revolving turret (25) for supporting at least two tool-holding heads (6, 27); and
- drive means (28) for the translatory motion of said turret in the direction of said advance motion and rotation of same about an oscillation axis (29) parallel to said advance direction.

6. A machine as claimed in claim 5, characterized in that said tool-changing unit (24) comprises a sensor detecting tool breakage (32), and in that said drive means is interlocked with said tool-breakage detecting sensor.

7. A machine as claimed in claim 5, characterized in that it comprises:
- a base (2) integral with said support body (12);
- slide guides (30) for said base in the direction of said advance motion; and
- displacement means (31) for said base, operatively coordinated with said drive means controlling the translatory motion of the revolving turret.

8. A machine as claimed in claim 1, characterized in that said control unit (11) comprises at least one counter (33) adapted to signal the number of oil discharges carried out by said fluid-operated means (19).

## Patentansprüche

1. Werkzeugmaschine zur Ausführung von Bohrungen in zur Extrusion der Glasfaser bestimmten Elementen, umfassend:
- mindestens ein Bohrwerkzeug (7);
- mindestens eine mit einem Werkzeugkopf (6) versehene Spindel (5);
- Antriebsmittel (10) zur Durchführung der Arbeitsdrehbewegung der Spindel (5); und
- Verstellmittel (3) zur Ausführung eines translatorischen Vorschubes der Spindel (5), umfassend:
einen Stützkörper (12);
einen mit dem Stützkörper (12) verstellbar verbundenen Schlitten (13), der die Spindel (5) aufnimmt; eine am Stützkörper (12) festliegende Antriebseinheit (14) mit einem beweglichen Verstellmittel (15) zur Durchführung des Vorschubes mit Hüben vorbestimmter Länge,
eine Kontrolleinheit (11), die wirksam zwischen dem Verstellelement (15) und dem Schlitten (13) für den translatorischen Vorschub liegt, die das Anhalten des Vorschubes der Spindel (5) bei Anwesenheit von auf das Werkzeug (7) wirkenden, axialen Widerstandskräfte, die einen vorbestimmten Wert überschreiten;
dadurch gekennzeichnet, dass der Stützkörper (12) hohl ist und der Schlitten (13) innerhalb des hohlen Stützkörpers verstellbar ist und ein Ende (13a) besitzt, das in Richtung des Werkzeugkopfes (6) gerichtet ist, dadurch, dass die Kontrolleinheit (11) eine mit einer vorbestimmten Ölmenge gefüllte und zwischen einem Kopf (12b) des hohlen Stützkörpers und einem zweiten Ende (13b) des Schlittens liegende Kammer und öldynamische Mittel (19) in Verbindung mit der Kammer (18) vorsieht, die das Öl aus der Kammer oberhalb eines Eichdruckes ausstoßen, welcher der Anwesenheit der axialen über den vorgegebenen Wert liegenden Widerstandskräften entspricht auszustoßen, um dem ausgestoßenen Öl zu erlauben, in die Kammer im Falle zurückzufließen, bei dem die Drücke unterhalb des Eichdruckes liegen, und dadurch, dass das Verstellelement (15) verstellbar in einer durchgehenden Bohrung (12c) des Kopfes (12b) des Stützkörpers in Eingriff steht und einen in dieser Kammer aufgenommenen Endabschnitt (15a) besitzt.

2. Maschine nach Anspruch 1, dadurch gekennzeichnet, dass der Stützkörper (12) durch einen Hohlzylinder und der Schlitten (13) durch ein innerhalb des Hohlzylinders verstellbares Kolbenelement festgelegt ist, und dass das Verstellelement (15) aus einer zylindrischen Stange festgelegt ist, die verschiebbar in einer durchgehenden Öffnung (12c) des Zylinderkopfes (12b) in Eingriff steht und einen in der Kammer aufgenommenen Endabschnitt (15a) besitzt.

3. Maschine nach Anspruch 1, dadurch gekennzeichnet, dass die öldynamischen Mittel (19) umfassen:
- ein Druckeinstellventil (21);
- ein zum Druckeinstellventil (21) parallel geschaltetes Rückschlagventil (22); und
- einen hydraulischen, mit diesen Ventilen (21, 22) verbundenen Speicher (23)

4. Maschine nach Anspruch 1, dadurch gekennzeichnet, dass sie eine Einheit (24) zum Auswechseln des am Stützkörper (12) festliegenden Werkzeuges umfasst, die ein Werkzeug, das dazu bestimmt ist, von der Spindel (5) abgenommen zu werden, entnimmt und ein neues Werkzeug mit der Spindel selbst kuppelt.

5. Maschine nach Anspruch 4, dadurch gekennzeichnet, dass die Einheit (24) zum Auswechseln des Werkzeuges vorsieht:
- einen Drehkopf (25) zum Haltern mindestens zweier Werkzeugköpfe (6, 27); und
- Verstellmittel (28) zur translatorischen Bewegung des Drehkopfes in Richtung des Vorschubes und Drehung desselben um die zur Vorschubrichtung parallelen Verschwenkachse (29).

6. Maschine nach Anspruch 5, dadurch gekennzeichnet, dass die Einheit (24) zum Auswechseln des Werkzeuges einen Sensor (32) vorsieht, der den Bruch des Werkzeuges feststellt, und dass die Verstellmittel dem Sensor zur Feststellung des Werkzeugbruches untergeordnet sind.

7. Maschine nach Anspruch 5, dadurch gekennzeichnet, dass sie umfasst:
- eine am Stützkörper (12) festliegende Basis (2);
- Führungen (3) zur Verstellung dieser Basis in Richtung des Vorschubes; und
- Mittel (31) zur Verschiebung der Basis, die den Verstellmitteln wirksam zugeordnet sind, die Kontrolle auf die translatorische Bewegung des Drehkopfes ausüben.

8. Maschine nach Anspruch 1, dadurch gekennzeichnet, dass die Kontrolleinheit (11) mindestens einen Zähler (33) vorsieht, der die Anzahl der durch die öldynamischen Mittel (19) vorgenommene Ölausstoßvorgänge signalisiert.

## Revendications

1. Machine-outil pour l'exécution de trous dans des éléments destinés à l'extrusion de la fibre en verre, comprenant:
- au moins un outil pointu (7);
- au moins un mandrin (5) pourvu d'une tête porte-outil (6);
- des moyens moteurs (10) pour réaliser le mouvement rotatoire de travail du mandrin (5); et
- des moyens de manitention (3), aptes à provoquer un mouvement de translation en avant du mandrin (5), lesdits moyens comprenant:
un corps de support (12);
un chariot (13) accouplée de manière coulissante audit corps de support (12), et apte à loger ledit mandrin (5); une unité motrice (14) étant solidaire avec ledit corps de support (12) et ayant un élément mobile de manutention (15), apte à réaliser ledit mouvement de translation (15) avec des courses ayant une longueur préétablie,
une unité de contrôle (11), qui est logée d'une façon opérante entre ledit élément de manutention (15) et la glissière (13), pour ledit mouvement de translation en avant, ladite unité étant apte à permettre l'arrêt du mouvement de translation dudit mandrin (5) en présence de forces axiales de résistance qui s'exercent sur l'outil (7) et qui dépassent une valeur préétablie;
ladite machine-outil étant caractérisée en ce que ledit corps de support (12) est creux, et ledit chariot (13) est coulissante à l'intérieur dudit corps de support creux et présente une de ses extrémités (13a) tournée vers ladite tête porte-outil (6), en ce que ladite unité de contrôle (11) se compose d'une chambre (18) remplie avec une quantité préétablie d'huile et logée entre une tête (12b) dudit corps de support creux et une deuxième extrémité (13b) du dite chariot, et des moyens oléodynamiques (19) en communication avec ladite chambre (18), lesdits moyens étant aptes à décharger l'huile de la chambre lorsqu'on dépasse une pression de calibrage qui indique la présence desdites forces axiales de résistance dépassant ladite valeur préétablie et à permettre le reflux de l'huile déchargé dans ladite chambre au cas où les pressions soient inférieures à ladite pression de calibrage, et en ce que ledit élément de manutention (15) est engagé de manière coulissante dans un trou de passage (12c) de ladite tête (12b) du corps de support et il présente une partie terminale (15a) logée dans ladite chambre.

2. Machine suivant la revendication 1, caractérisée en ce que ledit corps de support (12) se compose d'un cylindre creux, et ledit chariot (13) se compose d'un élément en forme de piston coulissant à l'intérieur dudit cylindre creux, et que ledit élément de manutention (15) se compose d'une tige cylindrique engagée de manière coulissante dans un trou de passage (12c) de ladite tête de cylindre (12b) et ayant une partie terminale (15a) logée dans ladite chambre.

3. Machine suivant la revendication 1, caractérisée en ce que lesdits moyens oléodynamiques (19) comprennent:
- une soupape de réglage de la pression (21);
- une soupape de retenue (22), placée parallèlement à ladite soupape de réglage de la pression (21); et
- un accumulateur hydraulique (23) en communication avec lesdites soupapes (21, 22).

4. Machine suivant la revendication 1, caractérisée en ce qu'elle comprend une unité (24) pour le remplacement de l'outil, ladite unité étant solidaire avec ledit corps de support (12) et apte à prélever un outil qu'il faut détacher dudit mandrin (5) et à accoupler un nouvel outil sur le mandrin.

5. Machine suivant la revendication 4, caractérisée en ce que ladite unité (24) pour le remplacement de l'outil se compose de:
- une tourelle tournante (25) pour le support d'au moins deux têtes porte-outils (6, 27); et
- des moyens de manutention (28) pour le mouvement de translation de ladite tourelle dans la même direction que ledit mouvement d'avance et rotation de la tourelle autour d'un axe d'oscillation (29) qui est parallèle à ladite direction d'avance.

6. Machine suivant la revendication 5, caractérisée en ce que ladite unité (24) pour le remplacement de l'outil se compose d'un détecteur (32), qui est à même de détecter la rupture de l'outil, et que lesdits moyens de manutention sont asservis audit détecteur de rupture de l'outil.

7. Machine suivant la revendication 5, caractérisée en ce qu'elle se compose de:
- une base (2) solidaire avec ledit corps de support (12);
- des glissières (30) pour le glissement de ladite base dans la direction dudit mouvement d'avance; et
- des moyens (31) pour le déplacement de ladite base, étant coordonnés d'une façon opérant avec lesdits moyens de manutention qui exercent le contrôle sur le mouvement de translations de la tourelle tournante.

8. Machine suivant la revendication 1, caractérisée en ce que ladite unité de contrôle (11) se compose au moins d'un compteur (33), apte à indiquer le nombre d'opérations de décharge de l'huile réalisées par lesdits moyens oléodynamiques.
